# EUROPEAN PATENT APPLICATION

(11) **EP 3 116 072 A1**
(43) Date of publication of application: **11.01.2017**
(21) Application number: 16178210.7
(22) Date of filing: 06.07.2016
(51) Int. Cl.: H01R 13/115, H01R 13/24, H01R 4/18, H01R 43/04, H01R 13/11

(54) **SPADE CONNECTOR AND ASSOCIATED SYSTEMS AND METHODS**

(30) Priority: 07.07.2015 US 201562189370 P
(71) Applicant: Hayward Industries, Inc., Elizabeth NJ 07201 (US)
(72) Inventor: Renaud, Benoit Joseph, Fort Atkinson, Wisconsin 53538 (US); Cummings, Mike, Smithfield, Rhode Island 02917 (US)
(74) Representative: Cross, James Peter Archibald

(57) **Abstract**

Exemplary embodiments are directed to spade connectors for mating with an electrolytic blade. The electrolytic blade can include a body defining side walls. The electrolytic blade can include a protrusion defining a top edge and a bottom edge. The spade connector can include a body defining a distal end and a proximal end. The spade connector can include a connector extending from the body. The connector can include first and second inwardly biased flanges configured and dimensioned to engage the top and bottom edges of the protrusion of the electrolytic blade. Exemplary embodiments are also directed to systems and methods associated with the spade connectors.

## Description

### TECHNICAL FIELD

The present disclosure relates to spade connectors and associated systems and methods and, in particular, to spade connectors that provide efficient electrical connections between electrical cables and electrolytic blades.

### BACKGROUND

In the pool and spa industry, it is important that water be adequately sanitized to prevent the growth of microorganisms, algae, etc. Adequate sanitization is important not only to protect the health and safety of bathers, but to also ensure proper water clarity in a pool or spa. A number of sanitization techniques have been implemented to sanitize pool/spa water, such as chemical additives (e.g., chlorine, bromine, etc.), introduction of ozone into pool/spa water, ultraviolet sanitization, etc.

Electrolytic cells (or, so-called "salt chlorinators") represent one way of sanitizing a pool or spa. In this arrangement, an amount of salt (sodium chloride) is periodically added to pool or spa water (e.g., a few times per year), an electric charge is imparted on the electrolytic cell, and pool or spa water is pumped through the cell. The electrolytic cell generally includes a plurality of electrolytic blades coated with an insulative material. During electrolysis, an electric charge is passed into the electrolytic blades through a connector joining an electrical cable to the respective electrolytic blade. Through electrolysis, the salt in the water is converted to free chlorine, which is subsequently pumped into the pool or spa to sanitize water.

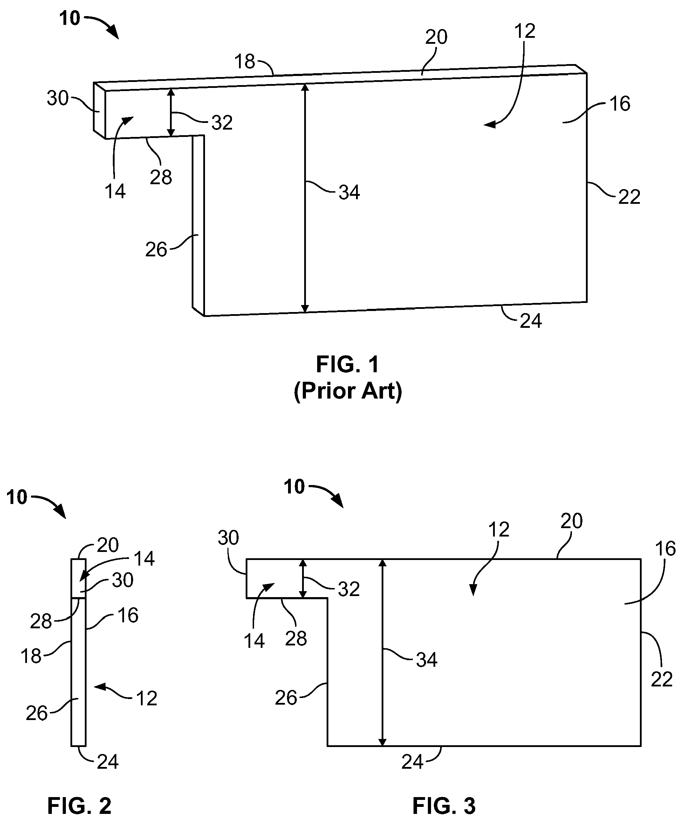

FIGS. 1-3 show perspective, front and side views of traditional electrolytic blades 10. Electrolytic blades 10 generally include a planar body 12, e.g., a rectangular body, and a protrusion 14 extending from one corner of the body 12. The protrusion 14 is generally integrally formed from the material forming the body 12. The body 12 and the protrusion 14 share first and second side walls 16, 18, and a top edge 20. The body 12 further includes a rear edge 22, a bottom edge 24, and a front edge 26 that extends from the bottom edge 24 up to the protrusion 14. The protrusion 14 includes a bottom edge 28 and a front edge 30. The first and second side walls 16, 18 of the electrolytic blade 10 include the insulative coating thereon, while the edges 20-30 remain uncoated. The height 32 of the protrusion 14 is a fraction of the overall height 34 of the electrolytic blade 10.

One type of connector assembly joining the electrical cable to the electrolytic blade can be in the form of a stud, e.g., a titanium machined stud, resistance welded to a portion of the electrolytic blade. For example, a portion of the first and second side walls 16, 18 of the body 12 or the protrusion 14 of the electrolytic blade 10 of FIGS. 1-3 can be sanded to remove the insulative coating and the stud can be welded to the sanded portion of the electrolytic blade. A combination of nuts can further be implemented for mounting an electrical ring connector to the stud, thereby resulting in an electrical connection between the electrical cable and the electrolytic blade.

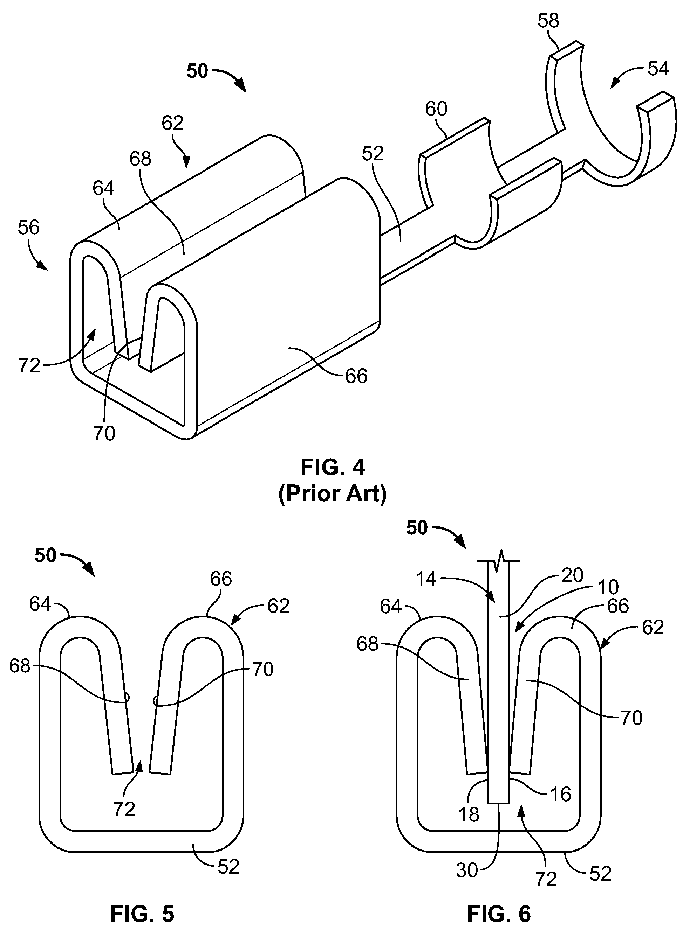

Another type of connector assembly joining the electrical cable to the electrolytic blade can be in the form of a spade connector. For example, FIGS. 4-6 show perspective and side views of a traditional spade connector 50. Traditional spade connectors 50 generally include a body 52 with a distal end 54 and a proximal end 56. The distal end 54 can include one or more crimping mechanisms 58, 60 for attachment of an exposed portion of the electrical cable. The proximal end 56 can include a connector 62 configured to secure to the protrusion 14 of the electrolytic blade 10 of FIGS. 1-3. First and second sides 64, 66 of the connector 62 are generally curled inwardly to define first and second contact surfaces 68, 70. The inwardly curled first and second sides 64, 66 also form an enclosure 72 between the body 52 and the inner surfaces of the first and second sides 64, 66.

For connection purposes, a portion of the first and second side walls 16, 18 of the protrusion 14 of the electrolytic blade 10 can be sanded to remove the insulative coating, and the protrusion 14 is inserted into the narrow opening between the first and second contact surfaces 68, 70 (see, e.g., FIG. 6). The first and second contact surfaces 68, 70 thereby adjoin the first and second side walls 16, 18 of the protrusion 14, resulting in an electrical connection between the electrical cable and the electrolytic blade 10. In particular, rather than adjoining any of the edges 20-30 of the electrolytic blade 10, the electrical connection is made by contacting sanded portions of the first and second side walls 16, 18 with the first and second contact surfaces 68, 70.

However, both types of connector assemblies traditionally used require sanding of portions of the electrolytic blade to expose the non-insulated areas for attachment and/or require additional parts for making the electrical connection between the cable and the electrolytic blade. These steps increase the time and costs associated with assembly and installation of the electrolytic blades.

Thus, a need exists for spade connectors that provide cost-effective and efficient electrical connection between an electrical cable and electrolytic blades. These and other needs are addressed by the spade connectors and associated systems and methods of the present disclosure.

### SUMMARY

In accordance with embodiments of the present disclosure, exemplary spade connectors for mating with an electrolytic blade are provided. The electrolytic blade can include a body defining side walls. The electrolytic blade can include a protrusion defining a top edge and a bottom edge. The spade connector can include a body defining a distal end and a proximal end. The spade connector can include a female connector extending from the body. The connector can include first and second inwardly biased flanges configured and dimensioned to engage the top and bottom edges of the protrusion of the electrolytic blade.

The body can define a substantially planar bottom surface of the spade connector. The connector can be disposed at or near the proximal end of the body. In some embodiments, each of the first and second inwardly biased flanges defines a substantially V-shaped form. In some embodiments, each of the first and second inwardly biased flanges defines a substantially rounded form. The inner surfaces of the first and second inwardly biased flanges define first and second contact surface for making electrical contact with the conductive top and bottom edges of the protrusion.

The connector can define an enclosure into which at least a portion of the protrusion can be inserted. The connector can be configured to impart a biasing force against the top and bottom edges of the protrusion. The biasing force ensures that the protrusion remains within the connector and further ensures that electrical contact is maintained between the protrusion and the connector.

In some embodiments, the connector can include first and second perpendicular flanges extending from the body, and first and second linear flanges extending from the respective first and second perpendicular flanges to define an enclosure into which at least a portion of the protrusion is inserted. In some embodiments, the connector can include at least one cutout on each corner joint between the first and second perpendicular flanges and the first and second linear flanges. In some embodiments, a central portion of the first and second perpendicular flanges can be inwardly curved (e.g., into the enclosure) to generate the biasing force on the protrusion.

In some embodiments, the spade connector can include at least one mechanism (e.g., means for retaining, crimping, or the like) including two flanges extending from the body configured for attachment of an electrical cable to the body. The two flanges can include features formed thereon for fixation of the electrical cable. For example, the features can create friction forces to prevent slippage of the electrical cable.

In accordance with embodiments of the present disclosure, exemplary spade connector systems are provided that include an electrolytic blade and a spade connector. The electrolytic blade includes a body defining side walls. The electrolytic blade includes a protrusion defining a top edge and a bottom edge. The spade connector can include a body defining a distal end and a proximal end. The spade connector can include a connector extending from the body. The connector includes first and second inwardly biased flanges configured and dimensioned to engage the top and bottom edges of the protrusion of the electrolytic blade.

In some embodiments, the electrolytic blade can include a cutout integrally formed in the body of the electrolytic blade. The cutout can be configured and dimensioned substantially complementary to a shape of the protrusion.

In accordance with embodiments of the present disclosure, exemplary methods of mating a spade connector with an electrolytic blade are provided. The electrolytic blade can include a body defining side walls. The electrolytic blade can include a protrusion defining a top edge and a bottom edge. The method can include providing a spade connector as described herein and inserting at least a portion of the protrusion between the first and second inwardly biased flanges. The method can further include mating inner surfaces of the first and second inwardly biased flanges with the top and bottom edges of the protrusion.

In some embodiments, the methods include flexing the first and second inwardly biased flanges away from each other to create or enlarge an enclosure configured and dimensioned to receive at least the portion of the protrusion. The inner surfaces of the first and second inwardly biased flanges can define first and second contact surfaces for electrically mating with the top and bottom edges of the protrusion. The method can include imparting a biasing force on the top and bottom edges of the protrusion with the first and second inwardly biased flanges to retain the protrusion within an enclosure defined by the connector.

Other objects and features will become apparent from the following detailed description considered in conjunction with the accompanying drawings. It is to be understood, however, that the drawings are designed as an illustration only and not as a definition of the limits of the invention.

### BRIEF DESCRIPTION OF THE DRAWINGS

To assist those of skill in the art in making and using the disclosed spade connectors and associated systems and methods, reference is made to the accompanying figures, wherein:
FIG. 1 is a perspective view of a traditional electrolytic blade;
FIG. 2 is a front view of a traditional electrolytic blade of FIG. 1;
FIG. 3 is a side view of a traditional electrolytic blade of FIG. 1;
FIG. 4 is a perspective view of a traditional spade connector;
FIG. 5 is a front view of a traditional spade connector of FIG. 4;
FIG. 6 is a front view of a traditional spade connector of FIG. 4 interlocked with an electrolytic blade;
FIG. 7 is a perspective view of a first embodiment of an exemplary spade connector in accordance with the present disclosure;
FIG. 8 is a front view of a first embodiment of an exemplary spade connector of FIG. 7;
FIG. 9 is a perspective view of a second embodiment of an exemplary spade connector in accordance with the present disclosure;
FIG. 10 is a front view of a second embodiment of an exemplary spade connector of FIG. 9;
FIG. 11 is a front view of a third embodiment of an exemplary spade connector in accordance with the present disclosure;
FIG. 12 is a perspective view of a fourth embodiment of an exemplary spade connector in accordance with the present disclosure;
FIG. 13 is a front view of a fourth embodiment of an exemplary spade connector of FIG. 12;
FIG. 14 is a top view of a fourth embodiment of an exemplary spade connector of FIG. 12;
FIG. 15 is a side, cross-sectional view of a fourth embodiment of an exemplary spade connector of FIG. 12;
FIG. 16 is a perspective view of a fifth embodiment of an exemplary spade connector in accordance with the present disclosure;
FIG. 17 is a front view of a fifth embodiment of an exemplary spade connector of FIG. 16;
FIG. 18 is a top view of a fifth embodiment of an exemplary spade connector of FIG. 16;
FIG. 19 is a side, cross-sectional view of a fifth embodiment of an exemplary spade connector of FIG. 16;
FIG. 20 is a perspective view of a sixth embodiment of an exemplary spade connector in accordance with the present disclosure;
FIG. 21 is a side view of a sixth embodiment of an exemplary spade connector of FIG. 20;
FIG. 22 is a top view of a sixth embodiment of an exemplary spade connector of FIG. 20;
FIG. 23 is a rear view of a sixth embodiment of an exemplary spade connector of FIG. 20;
FIG. 24 is a bottom view of a sixth embodiment of an exemplary spade connector of FIG. 20;
FIG. 25 is a perspective view of a sixth embodiment of an exemplary spade connector of FIG. 20 secured to a protrusion of an electrolytic blade;
FIG. 26 is a side view of a first embodiment of an exemplary electrolytic blade in accordance with the present disclosure;
FIG. 27 is a side view of an assembly of a first embodiment of exemplary electrolytic blades of FIG. 26;
FIG. 28 is a side view of a second embodiment of an exemplary electrolytic blade in accordance with the present disclosure;
FIG. 29 is a side view of an assembly of a second embodiment of exemplary electrolytic blades of FIG. 28;
FIG. 30 is a side view of a third embodiment of an exemplary electrolytic blade in accordance with the present disclosure;
FIG. 31 is a side view of an assembly of a third embodiment of exemplary electrolytic blades of FIG. 30;
FIG. 32 is a side view of a fourth embodiment of an exemplary electrolytic blade in accordance with the present disclosure;
FIG. 33 is a side view of an assembly of a fourth embodiment of exemplary electrolytic blades of FIG. 32;
FIG. 34 is a side view of a fifth embodiment of an exemplary electrolytic blade in accordance with the present disclosure; and
FIG. 35 is a side view of an assembly of a fifth embodiment of exemplary electrolytic blades of FIG. 34.

### DESCRIPTION OF EXEMPLARY EMBODIMENTS

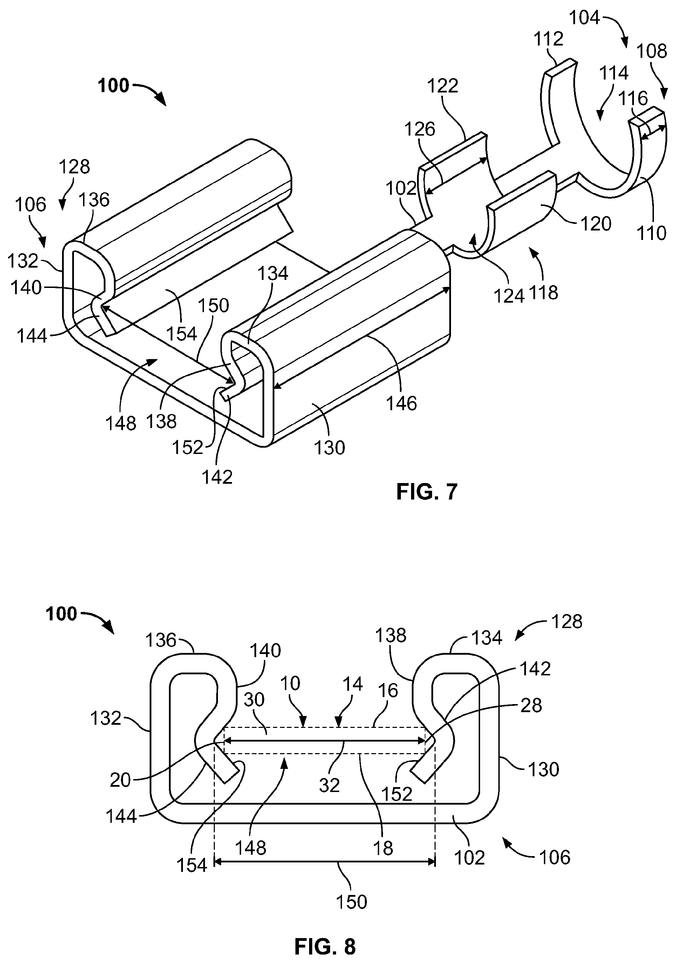

Turning to FIGS. 7 and 8, perspective and front views of a first embodiment of an exemplary spade connector 100 are provided. The spade connector 100 can be fabricated from a conductive material that has sufficiently flexible properties to allow attachment of exposed wires of an electrical cable to the spade connector 100 and attachment of the spade connector 100 to the electrolytic blade.

The spade connector 100 can include an elongated body 102 that defines the bottom surface of the spade connector 100. The spade connector 100 includes a distal end 104 and a proximal end 106 on opposing sides of the elongated body 102. The spade connector 100 can include a first mechanism 108 extending from the body 102 at or near the distal end 104 for connecting exposed wiring of an electrical cable to the spade connector 100. The first mechanism 108 can be in the form of first and second rounded flanges 110, 112 integrally formed with the body 102. The first and second rounded flanges 110, 112 can extend on opposite sides of the body 102 and away from each other. Each of the first and second rounded flanges 110, 112 can define a width 116. The first and second rounded flanges 110, 112 define an enclosure 114 therebetween configured and dimensioned to receive at least a portion of the exposed wiring of an electrical cable. The first and second rounded flanges 110, 112 can be bent inwardly towards the body 102 to crimp around and secure the exposed wiring of the electrical cable in the enclosure 114, resulting in an electrical connection between the electrical cable and the spade connector 100.

In some embodiments, the spade connector 100 can include a second mechanism 118 extending from the body 102 in a spaced relation relative to the first mechanism 108. In particular, the second mechanism 118 can be disposed between the distal and proximal ends 104, 106. The second mechanism 118 can be in the form of first and second angled flanges 120, 122 (e.g., L-shaped flanges) integrally formed with the body 102. The first and second angled flanges 120, 122 can extend substantially perpendicularly relative to the body 102 and on opposite sides of the body 102, and further extend towards each other to define an enclosure 124. The enclosure 124 can be formed between the first and second angled flanges 120, 122 and the body 102. Each of the first and second angled flanges 120, 122 can define a width 126. In some embodiments, the width 126 of the first and second angled flanges 120, 122 of the second mechanism 118 can be dimensioned greater than the width 116 of the first and second rounded flanges 110, 112 of the first mechanism 108.

The enclosure 124 can be configured and dimensioned to receive at least a portion of the exposed wiring of an electrical cable. For example, the exposed wiring can be passed through the enclosures 114, 124 of the first and second mechanisms 108, 118, and the first and second angled flanges 120, 122 can be bent inwardly towards the body 102 to crimp around and secure the exposed wiring of the electrical cable in the enclosure 124. An electrical connection between the electrical cable and the spade connector 100 can thereby be achieved. Although illustrated with two mechanisms 108, 118, it should be understood that the spade connector 100 can include only a single mechanism for securing the exposed wiring of the electrical cable thereto. However, the two mechanisms 108, 118 ensure at least two secure electrical connections between the exposed wiring and the spade connector 100 to reduce or prevent lapses in connectivity.

The spade connector 100 further includes a female connector 128 disposed at or near the proximal end 106 for attachment of the spade connector 100 to the protrusion 14 of the electrolytic blade 10 (see, e.g., FIG. 1) or an alternative electrolytic blade. The connector 128 can be integrally formed with the body 102. The connector 128 includes first and second substantially perpendicular flanges 130, 132 extending upwardly on opposing sides of the body 102. The connector 128 includes first and second inwardly directed flanges 134, 136 extending towards each other from the respective first and second perpendicular flanges 130, 132. In some embodiments, the first and second inwardly directed flanges 134, 136 can be curved in form. In some embodiments, the first and second inwardly directed flanges 134, 136 can be substantially linear in form and extend parallel to a plane defined by the body 102.

The connector 128 further includes first and second downwardly directly flanges 138, 140 extending from the respective first and second inwardly directed flanges 134, 136. In some embodiments, the first and second downwardly directed flanges 138, 140 can be substantially perpendicular to the first and second inwardly directed flanges 134, 136 and substantially parallel to the first and second perpendicular flanges 130, 132. The connector 128 can include first and second angled flanges 142, 144 extending from the respective first and second downwardly directed flanges 138, 140. The first and second angled flanges 142, 144 can be substantially V-shaped or L-shaped in cross-section along the width 146 of the connector 128. The first and second angled flanges 142, 144 can face each other to form an enclosure 148 defining a distance 150 therebetween.

The at least partially flexible material of fabrication of the spade connector 100 creates a spring-loaded or biased effect in the connector 128. In particular, the first and second downwardly directed flanges 138, 140 and the first and second angled flanges 142, 144 can be inwardly biased by the spring-loaded force of the material of fabrication. Thus, although the first and second angled flanges 142, 144 can be pushed away from each other by flexing the first and second downwardly directed flanges 138, 140 to increase the distance 150, the inwardly-directed bias of the material of fabrication generates a force to push or spring back the first and second angled flanges 142, 144 towards each other.

As shown in FIG. 8, during use, the first and second angled flanges 142, 144 of the connector 128 can be pushed apart to increase the distance 150 such that the protrusion 14 of the electrolytic blade 10 can be inserted between the first and second angled flanges 142, 144. In particular, the first and second angled flanges 142, 144 can be pushed apart to accommodate the height 32 of the protrusion 14 therebetween. Upon release, the first and second angled flanges 142, 144 can bias inwardly towards each other to clamp and secure the protrusion 14 of the electrolytic blade 10 at the top and bottom edges 20, 28 of the protrusion 14. As noted above, the edges 20, 28 of the protrusion 14 are generally not coated with an insulative material and, therefore, expose the underlying conductive material of the electrolytic blade 10. By contacting the opposing edges 20, 28 of the protrusion 14 with the first and second contact surfaces 152, 154 on the inside of the first and second flanges 142, 144, an electrical connection can be made between the electrolytic blade 10 and the spade connector 100 without the necessity of sanding portions of the first and second side walls 16, 18. In particular, as shown in FIG. 8, the main contact between the connector 128 and the protrusion 14 occurs at the edges 20, 28, and the first and second side walls 16, 18 extend between the first and second contact surfaces 152, 154.

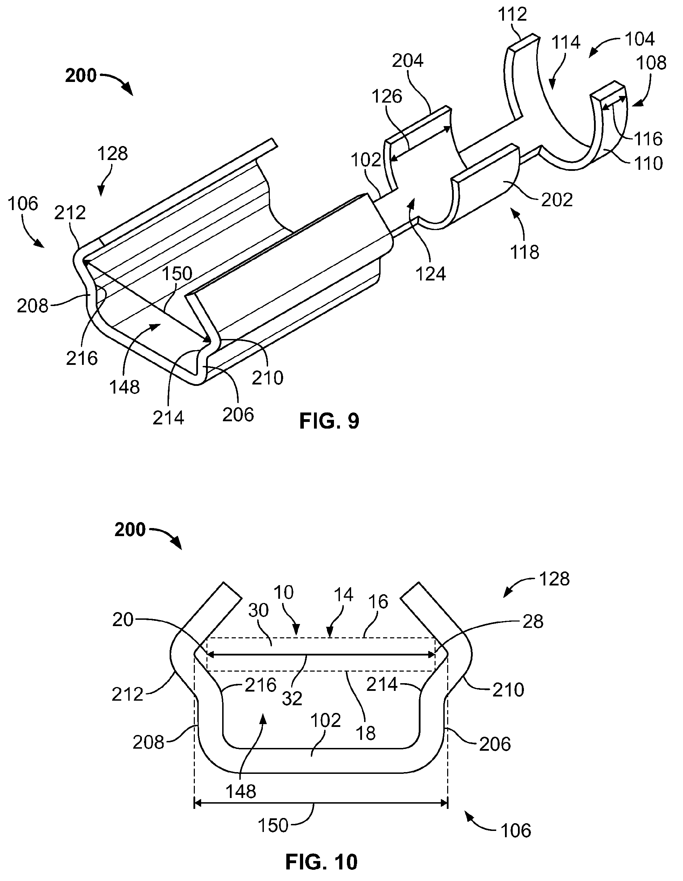

With reference to FIGS. 9 and 10, perspective and front views of a second embodiment of an exemplary spade connector 200 are provided. The spade connector 200 can be substantially similar in structure and function to the spade connector 100 discussed above, except for the distinctions noted herein. Therefore, like structures are labeled with like reference numbers.

The spade connector 200 also includes a second mechanism 118 for securing exposed wiring of an electrical cable thereto. However, rather than including L-shaped flanges, the second mechanism 118 can include first and second rounded flanges 202, 204 extending from opposite sides of the body 102. The overall height of the second mechanism 118 extending from the body 102 can be dimensioned smaller than the overall height of the first mechanism 108.

The spade connector 200 further includes a female connector 128 disposed at or near the proximal end 106. The connector 128 includes first and second perpendicular flanges 206, 208 formed integrally with the body 102 and extending vertically from opposite sides of the body 102. Each of the first and second perpendicular flanges 206, 208 includes an outwardly extending portion 210, 212 formed therein. In some embodiments, the first and second outwardly extending portions 210, 212 can be formed at a midpoint of the respective first and second perpendicular flanges 206, 208. In some embodiments, the first and second outwardly extending portions 210, 212 can be formed near a top edge of the respective first and second perpendicular flanges 206, 208. As shown in FIGS. 9 and 10, the outwardly extending portions 210, 212 can define substantially V-shaped portions that extend in directions parallel to a plane defined by the body 102 and away from each other.

The inner surfaces of the first and second outwardly extending portions 210, 212 can define first and second contact surfaces 214, 216 configured and dimensioned to contact edges 20, 28 of the protrusion 14 of the electrolytic blade 10. The at least partially flexible material of fabrication of the spade connector 200 results in the first and second perpendicular flanges 206, 208 being inwardly biased towards each other. Similar to the spade connector 100, the first and second perpendicular flanges 206, 208 can be flexibly bent away from each other to enlarge the distance 150 between the first and second contact surfaces 214, 216 such that the protrusion 14 can fit therebetween. Releasing the first and second perpendicular flanges 206, 208 causes the first and second contact surfaces 214, 216 to engage the edges 20, 28 of the protrusion 14 to create an electrical connection between the electrolytic blade 10 and the spade connector 200 without the necessity of sanding portions of the first and second side walls 16, 18.

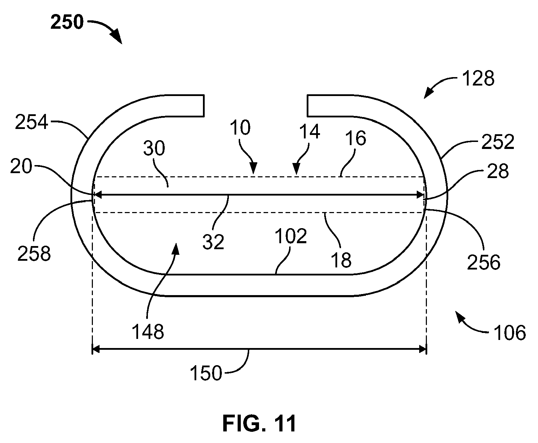

FIG. 11 shows a front view of a third embodiment of an exemplary spade connector 250. The structure and function of the spade connector 250 can be substantially similar to the spade connector 200, except for the distinctions noted herein. Therefore, like structures are labeled with like reference numbers.

The spade connector 250 also includes a connector 128 for attachment of the spade connector 250 to the protrusion 14 of the electrolytic blade 10. However, rather than including multiple angled flanges, the connector 128 can include first and second rounded flanges 252, 254 (e.g., C-shaped flanges) integrally formed with the body 102 and extending on opposing sides of the body 102. The first and second rounded flanges 252, 254 can initially curve outwardly away from the body 102 and further curve inwardly towards each other to form the enclosure 148. The inner surfaces of the first and second rounded flanges 252, 254 can define the first and second contact surfaces 256, 258 for contacting and securing the protrusion 14.

The first and second rounded flanges 252, 254 can be inwardly biased towards each other. During use, the first and second rounded flanges 252, 254 can be slightly bent away from each other to increase the distance 150 for insertion of the protrusion 14 between the first and second contact surfaces 256, 258. Upon release, the first and second rounded flanges 252, 254 can grip and secure the protrusion 14 therebetween, while maintaining contact between the first and second contact surfaces 256, 258 and the edges 20, 28. As such, an electrical connection between the electrolytic blade 10 and the spade connector 250 can be achieved without the necessity of sanding the first and second side walls 16, 18.

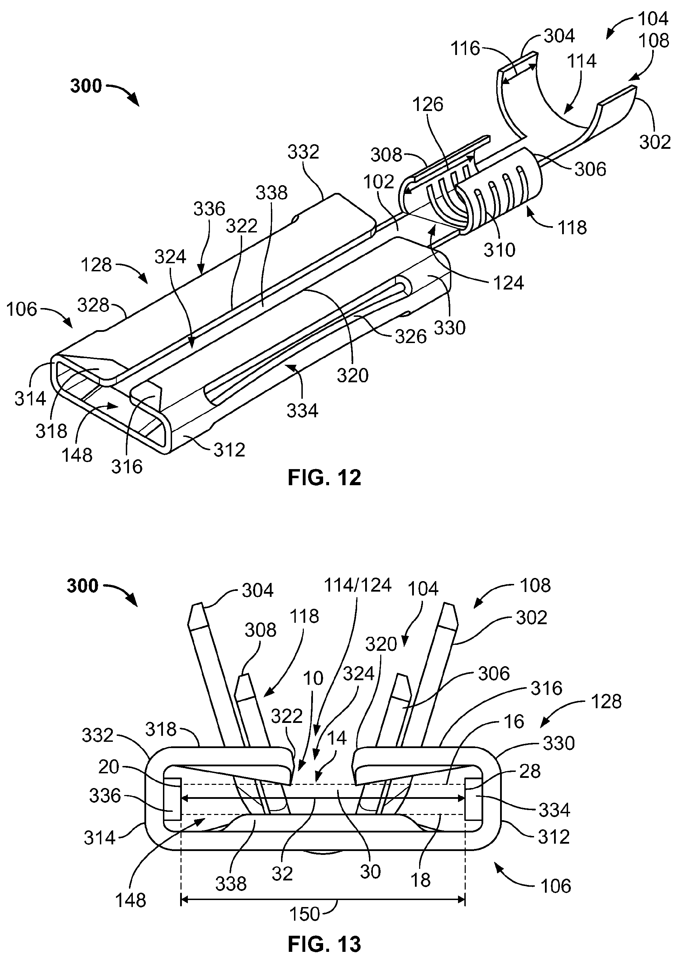

With reference to FIGS. 12-15, perspective, front, top and cross-sectional views of a fourth embodiment of an exemplary spade connector 300 are provided. The spade connector 300 can be substantially similar in structure and function to the spade connectors discussed above, except for the distinctions noted herein. Therefore, like structures are labeled with like reference numbers.

The spade connector 300 includes a first mechanism 108 and a second mechanism 118 for securing exposed wiring of an electrical cable to the spade connector 300. Rather than including rounded flanges, the first mechanism 108 can include first and second linear flanges 302, 304 integrally formed with the body 102 and extending at an angle away from the body 102. In particular, the first and second linear flanges 302, 304 can be disposed on opposing sides of the body 102 and extend vertically at an angle relative to the plane defined by the body 102. In some embodiments, the first and second linear flanges 302, 304 and the body 102 can define a substantially V-shaped cross-section.

The second mechanism 118 can also include first and second linear flanges 306, 308 integrally formed with the body 102 and extending at an angle relative to a plane defined by the body 102. As shown in FIGS. 12 and 13, the first and second linear flanges 306, 308 and the body 102 can define a substantially V-shaped cross-section. In some embodiments, the inner and/or outer surfaces of the first and second linear flanges 306, 308 and the body 102 can include features 310 (e.g., ridges, slots, texture, or the like) to assist in gripping and securing cable wiring when the first and second linear flanges 306, 308 are bent onto and against the wiring. In particular, the features 310 can reduce or prevent slippage of the wiring between the body 102 and the first and second linear flanges 306, 308.

The female connector 128 can define a substantially rectangular-shaped enclosure 148 extending at least half of the overall length of the spade connector 300. The connector 128 includes first and second perpendicular flanges 312, 314 integrally formed with the body 102 and extending on opposing sides of the body 102. The connector 128 further includes first and second linear flanges 316, 318 extending inwardly towards each other from the top ends of the first and second perpendicular flanges 312, 314. In particular, the first and second linear flanges 316, 318 can be integrally formed with the first and second perpendicular flanges 312, 314 and extend substantially parallel to the plane defined by the body 102. The central edges 320, 322 of the first and second linear flanges 316, 318 remain in a spaced relative to each other to define a gap 324 therebetween. The gap 324 between the first and second linear flanges 316, 318 allows the first and second perpendicular flanges 312, 314 and/or the first and second linear flanges 316, 318 to be bent slightly away from each other for insertion of the protrusion 14 into the enclosure 148.

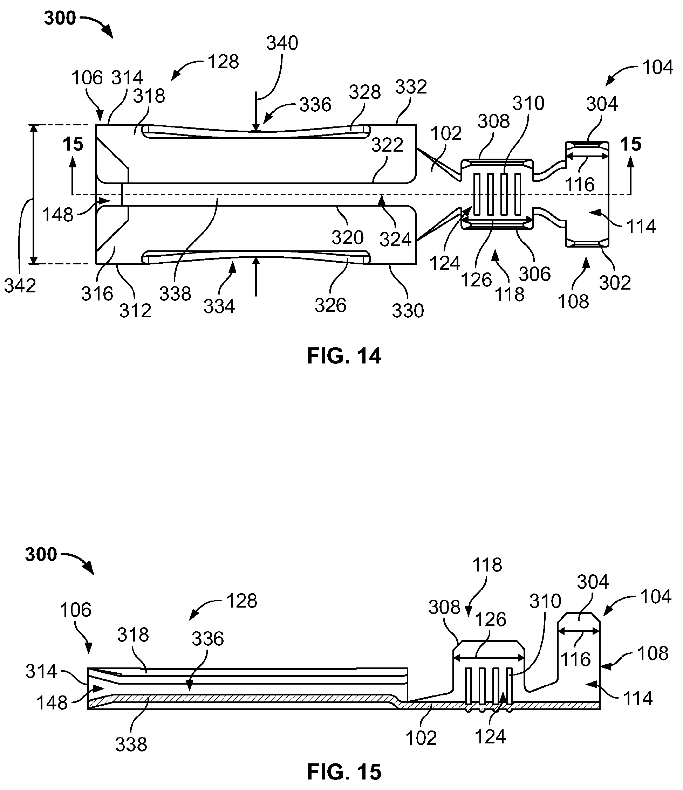

The connector 128 includes first and second cutouts 326, 328 formed in the curved corner joints 330, 332 connecting the first and second perpendicular flanges 312, 314 with the respective first and second linear flanges 316, 318. The first and second cutouts 326, 328 can extend through the corner joints 330, 332 and into the enclosure 148. Further, the first and second cutouts 326, 328 can extend only a partial length of the connector 128. The first and second cutouts 326, 328 allow the first and second perpendicular flanges 312, 314 to be bent inward towards each other and into the enclosure at the central portions 334, 336. The width 340 of the connector 128 at the central portions 334, 336 can therefore be dimensioned smaller than the width 342 of the connector 128 at the end portions (see, e.g., FIG. 14). The inwardly bent first and second perpendicular flanges 312, 314 create inwardly biased components defining a distance 150 for securing the edges 20, 28 of the protrusion 14 of the electrolytic blade 10 therebetween. During use, the protrusion 14 can be slid into the enclosure 148. The spring-like property of the inwardly biased first and second perpendicular flanges 312, 314 expands the distance 150 to permit insertion of the protrusion 14, while maintaining a force on the edges 20, 28 of the protrusion 14 such that an electrical contact can be made between the spade connector 300 and the protrusion 14.

In some embodiments, at least a portion of the body 102 located within the enclosure can include a raised surface 338 extending towards the first and second linear flanges 316, 318. In some embodiments, the first and second linear flanges 316, 318 can be downwardly biased towards the body 102. The raised surface 338 and the downwardly biased first and second linear flanges 316, 318 assist in gripping the first and second side walls 16, 18 of the protrusion 14 to prevent undesired removal of the protrusion 14 from the enclosure 148. However, it should be understood that the electrical contact between the electrolytic blade 10 and the spade connector 300 remains at the edges 20, 28.

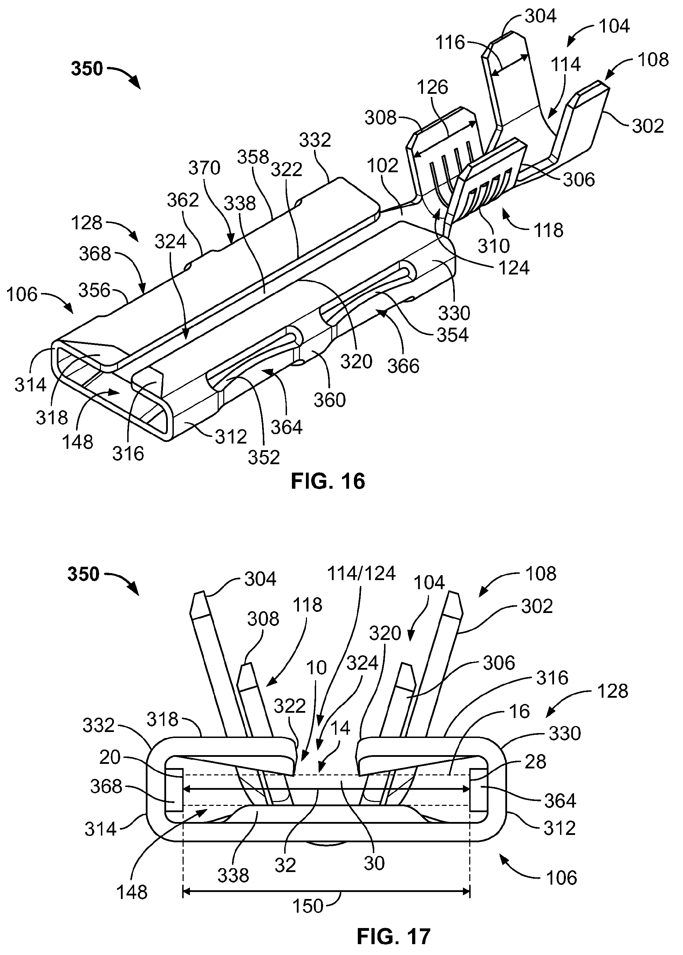

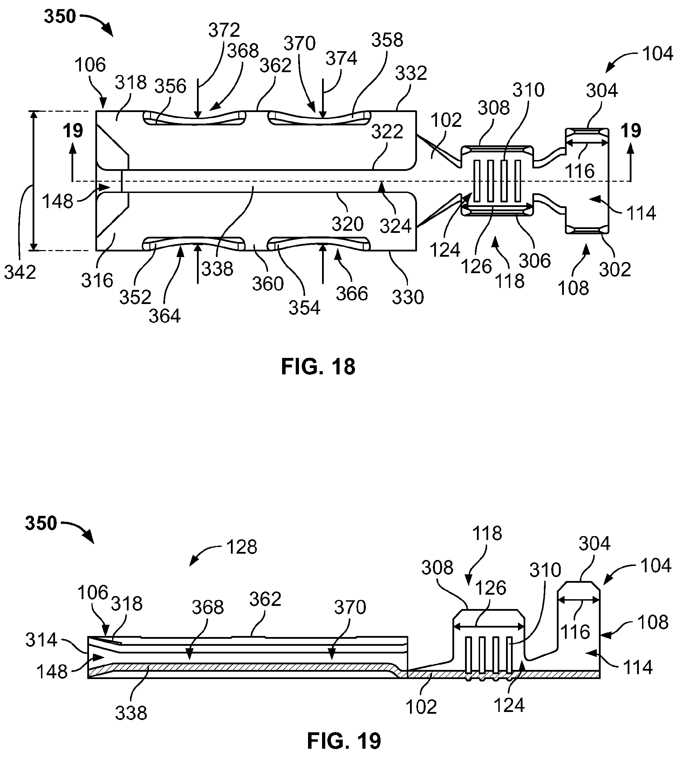

With reference to FIGS. 16-19, perspective, front, side and cross-sectional views of a fifth embodiment of an exemplary spade connector 350 are provided. The spade connector 350 can be substantially similar in structure and function to the spade connector 300, except for the distinctions noted herein. Therefore, like structures are labeled with like reference numbers.

Rather than including a single point on each side of the female connector 128 at which the first and second perpendicular flanges 312, 314 are inwardly bent, the spade connector 350 can include two such points. In particular, the connector 128 includes first, second, third and fourth cutouts 352-358 formed at the corner joints 330, 332 between the first and second perpendicular flanges 312, 314 and the first and second linear flanges 316, 318. Each side of the connector 128 can therefore include two cutouts separated by a central joint 360, 362. Each of the cutouts 352-358 can extend less than half the overall length of the connector 128 such that solid corner joints 330, 332 can be formed at the ends of the connector 128 and the central joints 360, 362 can be disposed between the respective cutouts 352-358.

The central portions 364-370 of the first and second perpendicular flanges 312 (relative to the cutouts 352-358) can be bent slightly inward towards each other and into the enclosure 148. In particular, the widths 372, 374 at the central portions 364-370 can be dimensioned smaller than the overall width 342 of the connector 128. During use, the protrusion 14 of the electrolytic blade 10 can be inserted into the enclosure 148 and the central portions 364-370 can give or bend outwardly slightly to allow the protrusion 14 therebetween while maintaining a securing force against the edges 20, 28. An electrical contact can thereby be created between the edges 20, 28 of the protrusion 14 and the spade connector 350.

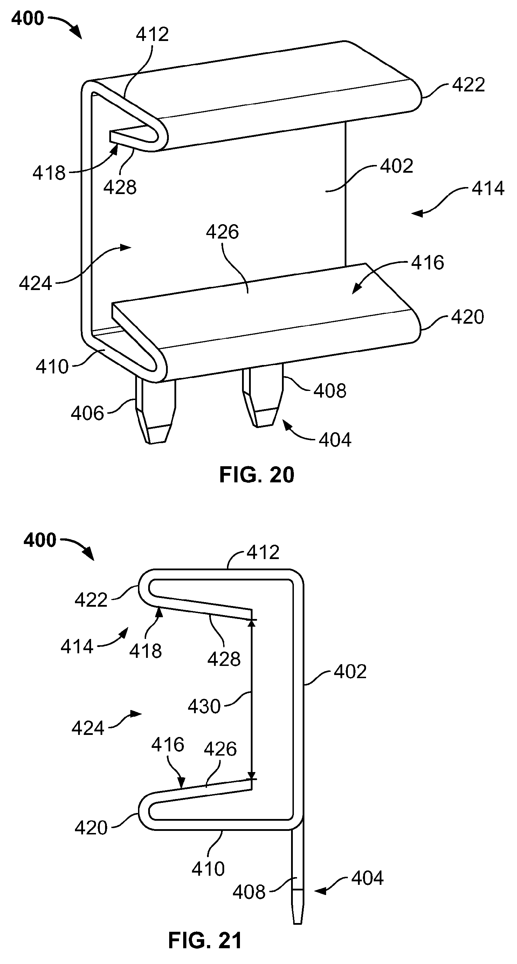

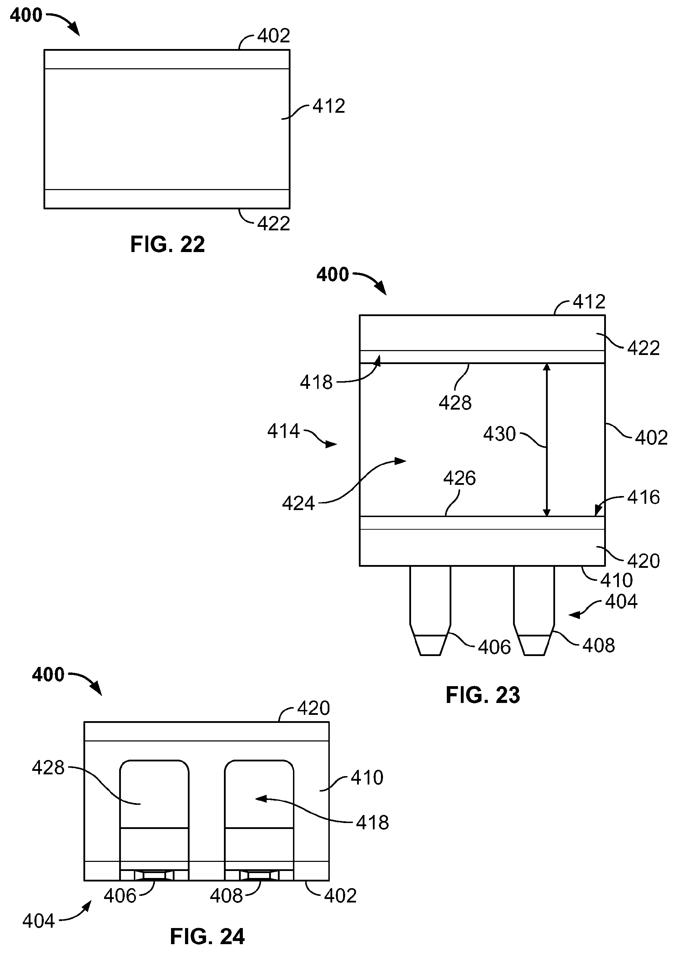

With reference to FIGS. 20-25, perspective, side, top, rear and bottom views of a sixth embodiment of an exemplary spade connector 400 are provided. The spade connector 400 includes a body 402 and a mechanism 404 extending therefrom for attachment of exposed wiring from an electrical cable. The mechanism 404 includes first and second flanges 406, 408 integrally formed with the body 402 and extending substantially parallel from the body 402. In particular, the first and second flanges 406, 408 can be punched out of a portion of a first perpendicular flange 410 extending from the body 402. During use, exposed wiring can be positioned between the first perpendicular flange 410 and the first and second flanges 406, 408, and the first and second flanges 406, 408 can be bent against the first perpendicular flange 410 to retain the exposed wiring therebetween. An electrical connection can thereby be made between the spade connector 400 and the electrical cable.

The spade connector 400 includes a female connector 414. The connector 414 includes first and second perpendicular flanges 410, 412 extending on opposing sides of the body 402. The connector 414 further includes first and second inwardly directed linear flanges 416, 418 connected to the first and second perpendicular flanges 410, 412 at rounded edges 420, 422. The first and second inwardly directed linear flanges 416, 418 create an enclosure 424 therebetween configured and dimensioned to receive the protrusion 14. The interior surfaces of the first and second linear flanges 416, 418 define the first and second contact surfaces 426, 428 for contacting the edges 20, 28 of the protrusion 14.

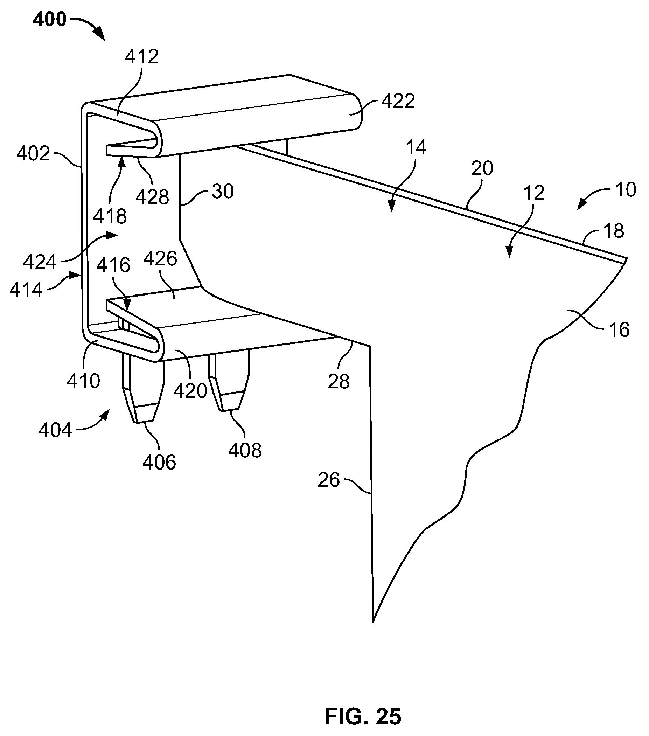

The at least partially flexible material of fabrication of the spade connector 400 allows the first and second perpendicular flanges 410, 412 and/or the first and second inwardly directed linear flanges 416, 418 to be initially inwardly biased, and further allows the first and second perpendicular flanges 410, 412 and/or the first and second inwardly directed linear flanges 416, 418 to flex during insertion of the protrusion 14 therebetween. In particular, the normal distance 430 between the first and second contact surfaces 426, 428 can be enlarged curing insertion of the protrusion 14 while maintaining a retention force on the edges 20, 28 of the protrusion 14. For example, FIG. 25 shows the edges 20, 28 of the protrusion 14 mated between the first and second contact surfaces 426, 428 to create an electrical contact between the spade connector 400 and the electrolytic blade 10.

The exemplary spade connectors discussed herein therefore provide a means for electrically interconnecting a cable and one or more electrolytic blades without the necessity of removing or sanding off the coating (e.g., insulative coating, Ruthenium coating, or the like) from the side walls of the electrolytic blade. The ability to connect the edges of the protrusion associated with the electrolytic blade directly with the contact surfaces of the spade connector reduce the amount of time and labor required for creating the electrical connection, resulting in a cost and time-efficient assembly.

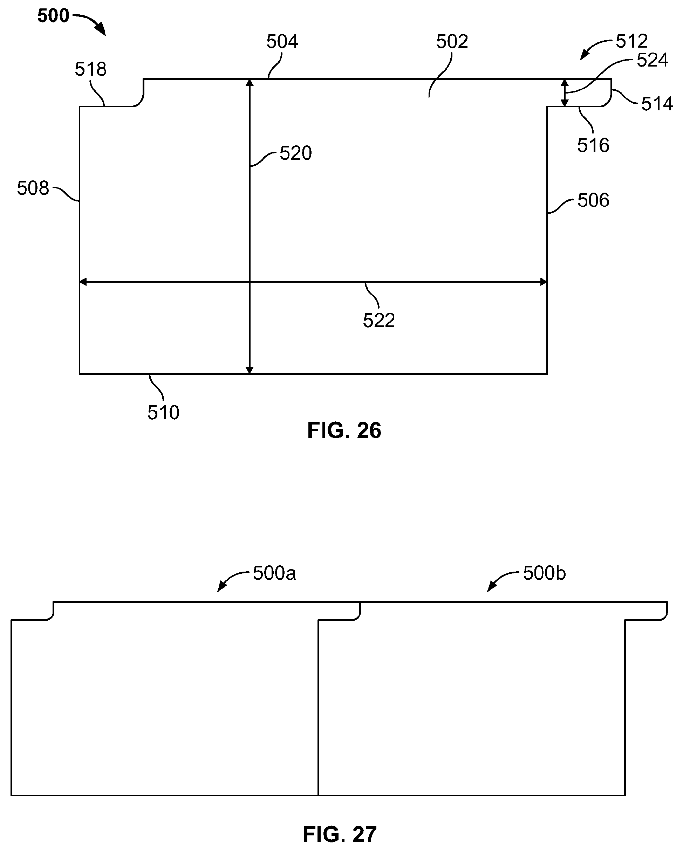

With reference to FIGS. 26 and 27, side views of a first embodiment of an exemplary electrolytic blade 500 are provided. The electrolytic blade 500 can be formed such that a reduction or prevention of scrap materials is generated during manufacturing of the electrolytic blade 500. For example, during fabrication, each electrolytic blade 500 can be stamped from a planar sheet of material and the exemplary configuration of the electrolytic blade 500 reduces or prevents scrap materials during the fabrication process.

The electrolytic blade 500 includes a substantially planar body 502 defining a top edge 504, first side edge 506, second side edge 508 on an opposite side of the body 502 from the first side edge 506, and a bottom edge 510. The body 502 defines a height 520 and a width 522. The protrusion 512 (e.g., a male connector) can extend from the upper corner of the first side edge 506 such that the top edge 504 is shared by the body 502 and the protrusion 512. The protrusion 512 includes a front edge 514 and a bottom edge 516. The top edge 504 and the bottom edge 516 of the protrusion 512 can be used to create the electrical contact with the disclosed spade connectors. A height 524 of the protrusion 512 can be dimensioned as a partial distance of the height 520 of the body 502.

The opposing upper corner of the second side edge 508 can include a cutout 518 formed therein. The cutout 518 can extend from the second side edge 508 in the direction of the first side edge 506 and defines a configuration substantially similar to the shape of the protrusion 512. As can be seen in FIG. 27, during fabrication, the planar sheet of material can be stamped such that a protrusion 512 of a first electrolytic plate 500a results in a cutout 518 in the adjacent second electrolytic plate 500b. In particular, the first side edge 506 of the first electrolytic plate 500a corresponds to the adjacent second side edge 508 of the second electrolytic blade 500b. Excess material is thereby reduced or prevented during fabrication of the electrolytic blades 500.

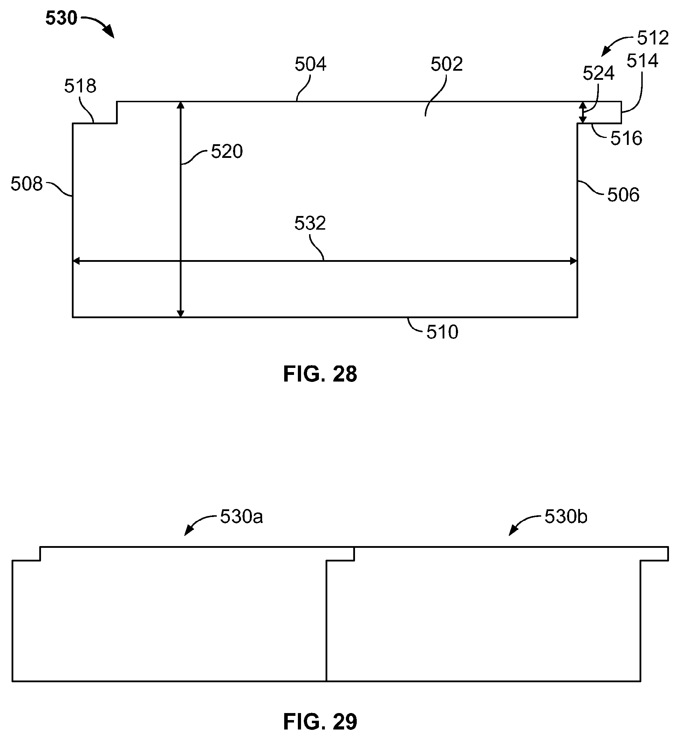

With reference to FIGS. 28 and 29, side views of a second embodiment of an exemplary electrolytic blade 530 are provided. The electrolytic blade 530 (and first and second electrolytic blades 530a, 530b) can be substantially similar in structure and function to the electrolytic blade 500, except for the distinctions noted herein. Therefore, like structures are labeled with like reference numbers.

In particular, the width 532 of the electrolytic blade 530 can be dimensioned longer than the width 522 of the electrolytic blade 500. It should be understood that a variety of widths can be used based on the application of the electrolytic blades or the housing in which the electrolytic blades are to be contained.

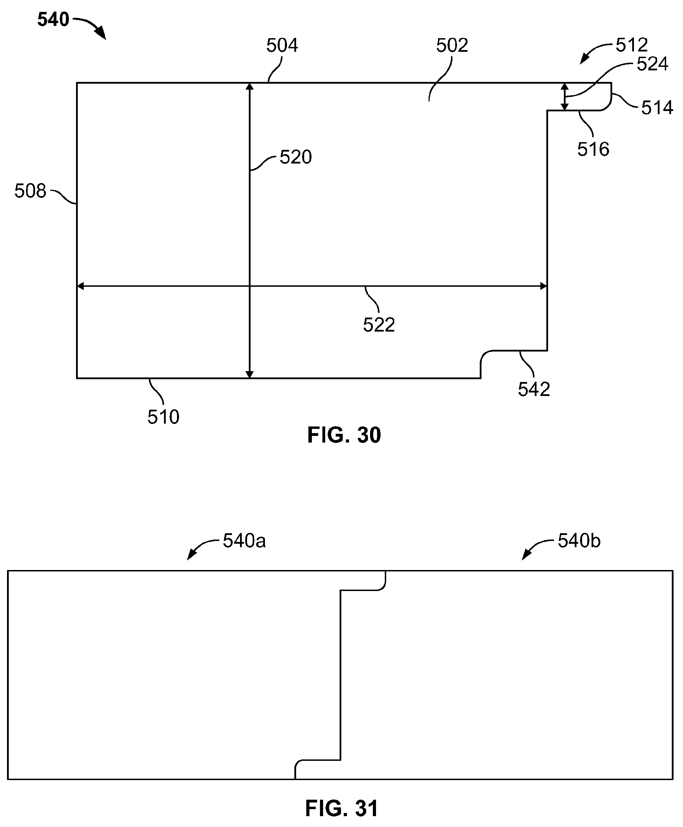

With reference to FIGS. 30 and 31, side views of a third embodiment of an exemplary electrolytic blade 540 are provided. The electrolytic blade 540 can be substantially similar in structure and function to the electrolytic blade 500, except for the distinctions noted herein. Therefore, like structures are labeled with like reference numbers.

In particular, rather than including a cutout 518 at the upper corner of the second side edge 508, the electrolytic blade 540 can include a protrusion 512 extending from the upper corner of the first side edge 506 and a cutout 542 formed in the lower corner of the first side edge 506. The cutout 542 can define a perimeter substantially similar to the shape of the protrusion 512. As shown in FIG. 31, during fabrication, the orientation of the first electrolytic blade 540a and be flipped relative to the orientation of the second electrolytic blade 540b such that creation of the protrusions 512 results in formation of the cutouts 542 in the adjacent electrolytic blade 540. In particular, the first side edges 506 of the first and second electrolytic blades 540a, 540b are oriented to be positioned adjacent to each other.

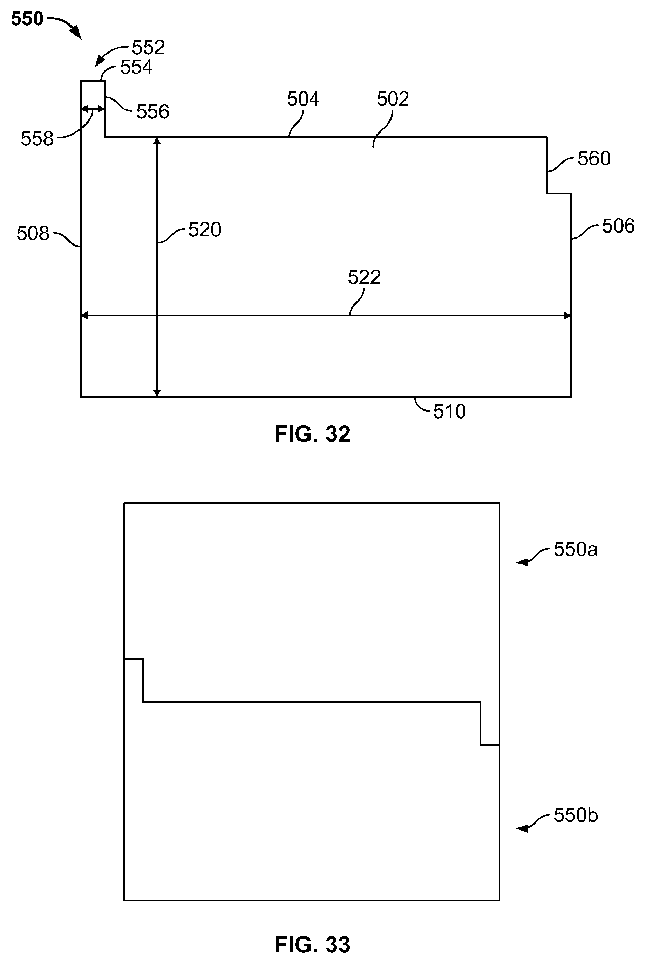

With reference to FIGS. 32 and 33, side views of a fourth embodiment of an exemplary electrolytic blade 550 are provided. The electrolytic blade 550 can be substantially similar in structure and function to the electrolytic blade 500, except for the distinctions noted herein. Therefore, like structures are labeled with like reference numbers.

In particular, rather than including a protrusion 512 extending from an upper corner of the first side edge 506, the electrolytic blade 550 can include a protrusion 552 extending from the leftmost portion of the top edge 504. The protrusion 552 can share the second side edge 508 with the body 502 and includes a top edge 554 and side edge 556. The width 558 of the protrusion 552 can be dimensioned as a fraction of the overall width 522 of the body 502.

The electrolytic blade 550 further includes a cutout 560 formed in the rightmost and upper corner of the body 502. The cutout 560 can be configured substantially similar to the shape of the protrusion 552. As shown in FIG. 31, during fabrication, the orientation of the first and second electrolytic blades 550a, 550b can be flipped relative to each other such that creation of the protrusions 552 results in formation of the cutouts 560 in the adjacent electrolytic blade 550. In particular, the top edges 504 of the first and second electrolytic blades 550a, 550b are orientated to be positioned adjacent to each other.

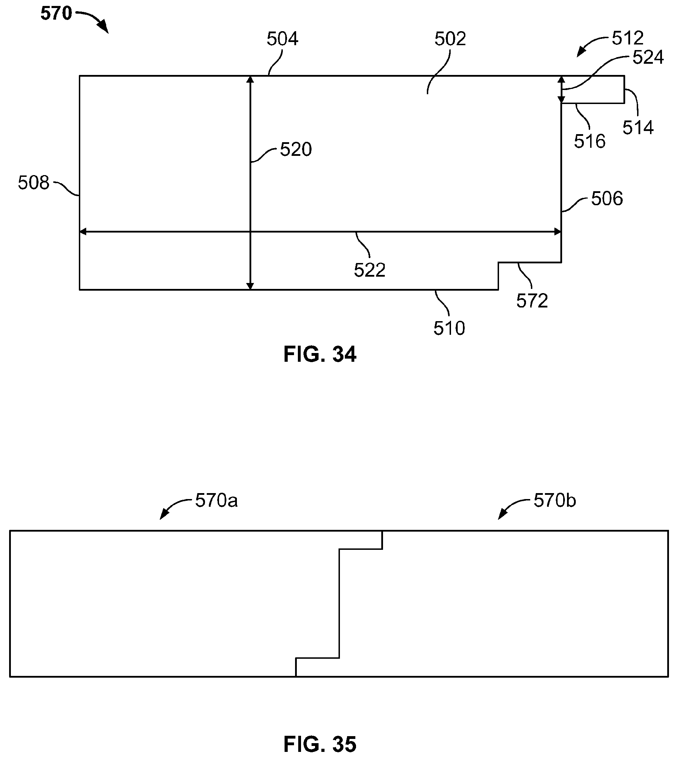

With reference to FIGS. 34 and 35, side views of a fifth embodiment of an exemplary electrolytic blade 570 are provided. The electrolytic blade 570 can be substantially similar in structure and function to the electrolytic blade 500, except for the distinctions noted herein. Therefore, like structures are labeled with like reference numbers.

In particular, the electrolytic blade 570 also includes a protrusion 512 extending from the upper right corner of the body 502. Rather than including a cutout 518 at the upper left corner of the body 502, the electrolytic blade 570 includes a cutout 572 at the bottom right corner of the body 502. The cutout 572 can be configured substantially similar to the shape of the protrusion 512. As shown in FIG. 35, during fabrication, the orientation of the first and second electrolytic blades 570a, 570b can be flipped relative to each other such that creation of the protrusions 512 results in formation of the cutouts 572 in the adjacent electrolytic blade 570. In particular, the first side edges 506 of the first and second electrolytic blades 570a, 570b are oriented to be positioned adjacent to each other.

Although discussed herein with respect to pool or spa applications, it should be understood that the exemplary spade connectors can be used in making electrical connections in a variety of application.

While exemplary embodiments have been described herein, it is expressly noted that these embodiments should not be construed as limiting, but rather that additions and modifications to what is expressly described herein also are included within the scope of the invention. Moreover, it is to be understood that the features of the various embodiments described herein are not mutually exclusive and can exist in various combinations and permutations, even if such combinations or permutations are not made express herein, without departing from the spirit and scope of the invention.

## Claims

1. A spade connector for mating with an electrolytic blade, the electrolytic blade including a body defining side walls and a protrusion defining a top edge and a bottom edge, the spade connector comprising:
a body defining a distal end and a proximal end; and
a connector extending from the body, the connector including first and second inwardly biased flanges configured and dimensioned to engage the top and bottom edges of the protrusion of the electrolytic blade.

2. The spade connector according to claim 1, wherein the body defines a planar bottom surface of the spade connector.

3. The spade connector according to any preceding claim, wherein the connector is disposed at or near the proximal end of the body.

4. The spade connector according to any preceding claim, wherein each of the first and second inwardly biased flanges defines a V-shaped form or a rounded form.

5. The spade connector according to any preceding claim, wherein inner surfaces of the first and second inwardly biased flanges define first and second contact surfaces.

6. The spade connector according to any preceding claim, wherein the connector comprises first and second perpendicular flanges extending from the body, and first and second linear flanges extending from the respective first and second perpendicular flanges to define an enclosure into which at least a portion of the protrusion is inserted.

7. The spade connector according to claim 6, comprising at least one cutout on each corner joint between the first and second perpendicular flanges and the first and second linear flanges.

8. The spade connector according to claim 6 or claim 7, wherein a central portion of the first and second perpendicular flanges is inwardly curved.

9. The spade connector according to any preceding claim, comprising at least one mechanism including two flanges extending from the body configured for attachment of an electrical cable to the body.

10. A spade connector system, comprising:
an electrolytic blade including a body defining side walls, the electrolytic blade including a protrusion defining a top edge and a bottom edge; and
a spade connector, the spade connector including (i) a body defining a distal end and a proximal end, and (ii) a connector extending from the body, the connector including first and second inwardly biased flanges configured and dimensioned to engage the top and bottom edges of the protrusion of the electrolytic blade.

11. The spade connector system according to claim 10, wherein the electrolytic blade comprises a cutout integrally formed in the body of the electrolytic blade, wherein the cutout is optionally configured and dimensioned complementary to a shape of the protrusion.

12. A method of mating a spade connector with an electrolytic blade, the electrolytic blade including a body defining side walls and a protrusion defining a top edge and a bottom edge, the method comprising:
providing a spade connector, the spade connector including (i) a body defining a distal end and a proximal end, and (ii) a connector extending from the body, the connector including first and second inwardly biased flanges configured and dimensioned to engage the top and bottom edges of the protrusion of the electrolytic blade;
inserting at least a portion of the protrusion between the first and second inwardly biased flanges; and
mating inner surfaces of the first and second inwardly biased flanges with the top and bottom edges of the protrusion.

13. The method according to claim 12, comprising flexing the first and second inwardly biased flanges away from each other to create an enclosure configured and dimensioned to receive at least the portion of the protrusion.

14. The method according to any one of claims 12 to 13, wherein the inner surfaces of the first and second inwardly biased flanges define first and second contact surfaces for electrically mating with the top and bottom edges of the protrusion.

15. The method according to any one of claims 12 to 14, comprising imparting a biasing force on the top and bottom edges of the protrusion with the first and second inwardly biased flanges to retain the protrusion within an enclosure defined by the connector.
